# EUROPÄISCHE PATENTSCHRIFT

(11) **EP 0 461 598 B1**
(45) Veröffentlichungstag und Bekanntmachung des Hinweises auf die Patenterteilung: **09.08.1995**
(21) Anmeldenummer: 91109520.6
(22) Anmeldetag: 11.06.1991
(51) Int. Cl.: B23B 9/08

(54) **Werkzeugmaschine**
Machine tool
Machine-outil

(30) Priorität: 13.06.1990 DE 9006627 U
(43) Veröffentlichungstag der Anmeldung: 18.12.1991
(73) Patentinhaber: WIHA WERKZEUGE, D-78136 Schonach (DE)
(72) Erfinder:
(74) Vertreter: Eichler, Peter, Dipl.-Ing.

(56) Entgegenhaltungen:
- DE-A- 2 338 207
- DE-A- 3 216 892
- GB-A- 1 337 179

## Beschreibung

Die Erfindung bezieht sich auf eine Werkzeugmaschine, mit einem positionierbaren Werkzeugträger und mit einem relativ dazu positionierbaren, rotierbaren Werkstückträger, der an einer Halterung der Maschine angebracht und von einem senkrecht zu seiner Rotationsachse angeordneten Elektromotor über ein Winkelgetriebe angetrieben ist, wobei die Halterung aus einer ersten, der Werkstückbearbeitung dienenden Stellung in eine zweite vorbestimmte Stellung verschwenkbar ist und einen zweiten rotierbaren Werkstückträger aufweist, der bei der Schwenkung der Halterung in die erste, der Werkstückbearbeitung dienende Stellung gelangt (siehe GB-A-1 337 179).

Derartige Werkzeugmaschinen sind allgemein bekannt und werden beispielsweise als Drehbänke ausgeführt. Ihr Werkstückträger ist beispielsweise ein Spannfutter, mit dem das Werkstück festgespannt wird, um es bei Rotationsantrieb beispielsweise mit einem Drehstahl zu bearbeiten. Nachteilig ist bei derartigen Werkzeugmaschinen durchweg, daß ein Werkstückwechsel die effektive Einsatzzeit der Werkzeugmaschine beschränkt, also diejenige Zeit, während der eine Formgebung des Werkstücks erfolgen kann.

Es ist bei Revolverdrehbänken ganz allgemein bekannt, durch einmalige Spannung des Werkstücks die Nebenzeiten für den Schlittenrückzug, das Schalten und das Zustellen stark herabzusetzen, indem das Werkstück mit Hilfe eines Revolverkopfes eingespannt wird, der sich von einer Arbeitsstellung zu einer weiteren Arbeitsstellung fortbewegen läßt, in der das Werkstück mit einem anderen Werkzeug bearbeitet wird. Das Werkstück durchläuft mehrere Bearbeitungsstationen und wird dann ausgespannt. Währenddessen ist eine Bearbeitung eines anderen Werkstücks nicht vorgesehen.

Aus der GB-A-1 337 179 ist eine Werkzeugmaschine mit den eingangs genannten Merkmalen bekannt. Die Werkzeugmaschine hat zwei im wesentlichen ebene Aufspanntische, die mit vertikalen Rotationsachsen drehangetrieben werden können, wobei der Drehantrieb quer zu den Rotationsachsen angeordnet ist. Oberhalb der beiden Halterungen bildenden Aufspanntische ist ein Werkzeugträger mit vertikaler Rotationsachse angeordnet und beide Aufspanntische können diesem Werkzeugträger wechselweise zugeordnet werden. Wegen der im wesentlichen horizontalen Erstreckung der beiden Aufspanntische bzw. Werkstückträger ist die bekannte Konstruktion räumlich aufwendig und eine Schwenkung der Halterung nur langsam möglich. Die Wechseltakte sind entsprechend lang. Das ist nur dann annehmbar, wenn auch die Bearbeitungszeiten der Werkstücke vergleichsweise groß sind, so daß die Wechseltakte zeitlich nicht ins Gewicht fallen.

Der Erfindung liegt die Aufgabe zugrunde, Werkzeugmaschinen mit den eingangs genannten Merkmalen so zu verbessern, daß die Werkstückauswechselzeiten verringert werden.

Diese Aufgabe wird bei einer Werkzeugmaschine mit den eingangs genannten Merkmalen dadurch gelöst, daß der Elektromotor an der Halterung befestigt ist, daß die Schwenkebene der Halterung senkrecht zu der Drehachse des Elektromotors angeordnet ist, daß auch der zweite Werkstückträger über ein Winkelgetriebe von einem zweiten Elektromotor drehangetrieben ist, der zu dem ersten Elektromotor auf derselben Seite der Halterung parallel angeordnet ist, und daß alle Rotationsachsen der Werkstückträger in der Schwenkebene der Halterung angeordnet sind.

Für die Wirkungsweise der Werkzeugmaschine ist zunächst wichtig, daß die Halterung mit dem fertig bearbeiteten Werkstück auf einem Werkstückträger in eine vorbestimmte Stellung verschwenkbar ist, so daß dort der Werkstückwechsel vorgenommen werden kann. Mit der Verschwenkung der Halterung aus einer der Werkstückbearbeitung dienenden Stellung ist verbunden, daß die Halterung einen zweiten Werkstückträger aufweist, der in die erste, der Werkstückbearbeitung dienende Stellung gelangt. Infolgedessen kann dort sofort nach Beendung der Verschwenkung eine Werkstückbearbeitung einsetzen, ungeachtet dessen, was in der zweiten Stellung mit dem zuvor bearbeiteten Werkstück geschieht.

Insbesondere ist die Werkzeugmaschine dazu geeignet, Stillstandzeiten durch Werkstückwechsel zu verringern oder gar zu vermeiden, wenn die Wechselzeiten gleich oder kleiner in den Bearbeitungszeiten sind. Es ist aber auch möglich, die Werkzeugmaschine so einzusetzen, daß der erste rotierbare Werkstückträger nicht in eine dem Werkstückwechsel dienende Stellung gelangt, sondern in eine in Schwenkrichtung vor der dem Werkstückwechsel dienenden Stellung in eine weitere der Werkstückbearbeitung dienende Stellung.

Wichtig ist neben allem, daß die Halterung zugleich mit dem Verschwenken des ersten rotierbaren Werkstückträgers einen zweiten rotierbaren Werkstückträger an die bisherige erste Stellung des ersten Werkstückträgers gelangen läßt, so daß dort unmittelbar nach Abschluß der Schwenkbewegung eine weitere Bearbeitung eines Werkstücks gestartet werden kann.

Die Schwenkebene der Halterung ist senkrecht zu der Drehachse des Elektromotors angeordnet. Es ergibt sich dadurch eine günstige Massenverteilung, bei der die Masse des Elektromotors den geringstmöglichen Einfluß auf eine schnelle Schwenkbewegung hat.

Die Werkzeugmaschine ist so ausgebildet, daß auch der zweite Werkstückträger über ein Winkelgetriebe von einem zweiten Elektromotor drehangetrieben ist, der dem ersten Elektromotor auf derselben Seite der Halterung parallel angeordnet ist. Durch diese Ausbildung des Drehantriebs für den zweiten Werkstückträger wird eine kompakte Bauform erreicht. Die Verwendung zweier Elektromotoren bietet Vorteile für die Steuerung der Rotation der Werkstückträger.

Wenn alle rotierbaren Werkstückträger in der Schwenkebene angeordnet sind, ist der Aufbau der Werkzeugmaschine in diesem Bereich auf die Aufgabe abgestimmt, daß alle Werkstückträger der Reihe nach an dieselbe der Werkstückbearbeitung dienende Stelle gelangen.

Es ist auch möglich, die Werkzeugmaschine so auszubilden, daß mehr als zwei rotierbare Werkstückträger an der Halterung angebracht und gleichmäßig über den Schwenkumfang verteilt angeordnet sind, und daß die Halterung in einer der Anzahl der Werkstückträger entsprechenden Schrittzahl in gleich großen Schritten um 360° verschwenkbar ist. Es ergibt sich eine bezüglich der Schwenkachse symmetrische Verteilung aller Werkstückträger, wie auch die Möglichkeit, die Elektromotoren für die Werkstückträger entsprechend symmetrisch anzuordnen. Durch die gleiche Schrittgröße wird gewährleistet, daß stets ein Werkstück in der der Werkstückbearbeitung dienenden Stellung ist.

Eine übersichtliche und wenig aufwendige Konstruktion ergibt sich dadurch, daß die Halterung der rotierbaren Werkstückträger von einem einzigen, maschinengestellfesten Schrittmotor verschwenkbar ist. Der Schrittmotor ist mit vergleichsweise geringem Aufwand an Steuermitteln für die erforderliche Schwenksteuerung heranzuziehen.

Eine konstruktiv vorteilhafte Ausgestaltung der Werkzeugmaschine liegt vor, die Halterung einen horizontalen Schwenkteller hat, der in den vorbestimmten Stellungen von einer druckmittelbeaufschlagbaren Hubeinrichtung wahlweise schwenkfest am Maschinengestell verrastbar oder außerhalb dieser Verrastung in einer seine Schwenklage zu ändern gestattenden Stellung anzuordnen ist. Die Schwenkvorrichtung kann in Verbindung mit der Hubeinrichtung so ausgebildet werden, daß die Schwenkstellungen mit mechanischen Mitteln präzise eingehalten werden, wobei der bauliche Aufwand für das Anheben und Absenken gering ist und auch die dafür erforderliche Steuerung einfach ausgebildet sein kann.

Eine besonders präzise mechanische Verrastung zwischen dem Schwenkteller und dem Maschinengestell läßt sich dadurch erreichen, daß der Schwenkteller an seiner Unterseite einen mit seiner Schwenkachse koaxialen Zahnkranz mit einer zur Schwenkachse ausgerichteten Verzahnung aufweist, die mittels der Hubeinrichtung mit der Verzahnung eines maschinengestellfesten Zahnkranzes in oder außer Eingriff bringbar ist. Die Verzahnung kann den auf sie infolge der Drehverstellung und infolge der Werkstückbearbeitung einwirkenden Beanspruchungen entsprechend sicher ausgebildet werden.

Besonders vorteilhaft ist die Ausbildung der Verzahnung der Zahnkränze als eine der Schwenkebene parallele Plan-Kerbverzahnung. Diese sogenannte Hirth-Verzahnung dient insbesondere der zutreffenden Zentrierung des Schwenktellers bezüglich der gewünschten Schwenkposition.

Eine baulich kompakte und zugleich dem erforderlichen Schwenkantrieb des Schwenktellers gerecht werdende Konstruktion ergibt sich dadurch, daß die Hubeinrichtung einen den Schwenkteller abstützenden, mit der Schwenkachse gleichachsigen Kolben aufweist, der über eine Gleitbewegungen gestattende Verzahnung mit dem Antrieb des maschinengestellfesten Schwenkmotors antriebsmäßig verbunden ist.

Damit der Schwenkteller reibungsarm zwischen den Schwenkstellungen verstellt werden kann, ist die Werkzeugmaschine so ausgebildet, daß der Hubkolben einen Radialflansch mit einem bei Druckbeaufschlagung am Maschinengestell abstützbaren und den Hub begrenzenden Wälzlager aufweist.

Die Erfindung wird anhand eines in der Zeichnung dargestellten Ausführungsbeispiels erläutert. Es zeigen:
- Fig.1: eine perspektivische schematische Darstellung einer Werkzeugmaschine an der die Erfindung ausgeführt ist,
- Fig.2: eine vergrößerte perspektivische Darstellung einer zwei Werkzeugträger aufweisenden Halterung,
- Fig.3: eine der Fig.2 ähnliche Ansicht, in der die Halterung gegenüber dem Maschinengestell verdreht dargestellt ist, und
- Fig.4: eine Schnittzeichnung durch einen Drehteller einer Halterung mit unter dem Teller angeordneter Hubeinrichtung und mit einem Schwenkmotor.

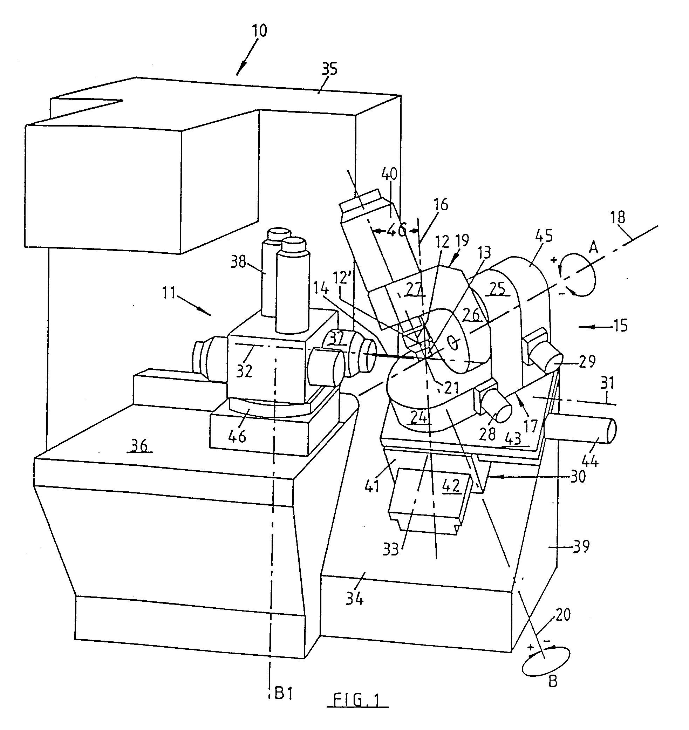

Die in Fig.1 schematisch dargestellte Werkzeugmaschine 10 hat ein schrankförmiges Gestell 35 mit einem Tisch 36 für eine Werkstückhalterung 11. Letztere besitzt einen Werkstückträger 37 zur Aufnahme eines schematisch als Strich dargestellten Werkstücks 14. Der Werkstückträger 37 und damit das Werkstück 14 sind von einem Elektromotor 38 über ein nicht dargestelltes Winkelgetriebe drehantreibbar.

Des weiteren hat die Werkzeugmaschine 10 einen Schrägtisch 39 mit einer unter 35° geneigten Neigungsebene 34, auf der eine Verstelleinrichtung 15 für einen Werkzeugträger 12 angeordnet ist. Der Werkzeugträger 12 ist hier ebenfalls ein Spannfutter mit einem Werkzeug 13, das zum Wälzschlagbearbeiten ausgebildet ist. Das Werkzeug 13 wird also rotiert und schlägt bei entsprechend dichter Anstellung an das Werkstück 14 in dessen Werkstoff. Dadurch werden der Formgebung des Werkzeugs entsprechend Nuten, Verzahnungen, Mehrkante od.dgl. im Werkstück 14 hergestellt, wobei dieses vorzugsweise rotiert, so daß der Schlagfräser insgesamt nur einmal vorgeschoben zu werden braucht, wodurch sich die gewünschte erhebliche Herstellungsgeschwindigkeit ergibt. Es versteht sich jedoch, daß als Werkzeug auch jedes andere spanabhebende Werkzeug eingesetzt werden kann, welches zum Spanabheben rotierend angetrieben wird, beispielsweise ein herkömmlicher Spiralbohrer.

Das Werkzeug 13 bzw. der Werkzeugträger 12 wird von einem Elektromotor 40 angetrieben, der gleichachsig mit der Drehachse des Werkzeugträgers 12 angeordnet ist. Der Elektromotor 40 wird von der Verstelleinrichtung 15 getragen.

Die Verstelleinrichtung 15 besteht zunächst aus einem Kreuztisch 30, der es also ermöglicht, ein von ihm abgestütztes Teil in allen Richtungen einer Ebene zu bewegen, indem dieses in den Richtungen der Verstellachse 31 und/oder in den Richtungen der Verstellachse 33 bewegt wird. Die Verstellachse 33 ist einer Zwischenplatte 41 zugeordnet, die auf der in nicht dargestellter Weise auf der eine Tischfläche bildenden Neigungsebene 34 befestigten Bodenplatte 42 präzisionsgeführt ist. Die Zwischenplatte 41 trägt ihrerseits eine im rechten Winkel zu ihr längs der Verstellachse 31 verschieblich präzisionsgeführte Oberplatte 43. Wenn diese Oberplatte 43 längsverstellt wird, wozu beispielsweise ein Verstellmotor 44 dient, so verschiebt sich die Oberplatte parallel zur Rotationsachse 32 des Werkstücks 14. Bei einer Verstellung der Zwischenplatte 41 erfolgt eine Verstellung senkrecht zu der Rotationsachse 32 des Werkstücks 14. In letzterem Falle ist damit zugleich eine Höhenverstellung der Oberplatte 43 verbunden und damit eine entsprechende Höhenverstellung des von dieser Platte getragenen Aufbaus.

Der Tischaufbau des Kreuztischs 30 der Verstelleinrichtung 15 besteht im wesentlichen aus zwei Schwenkhalterungen 17,19, die jeweils als Winkelstück ausgebildet sind. Die Schwenkhalterung 17 ist mit ihrem ersten Arm 24 auf der Oberplatte 43 des Kreuztischs 30 angeordnet und um eine zugehörige Schwenkachse 16 um 360° schwenkbar. Der zweite Arm 25 der Schwenkhalterung 17 ist der Schwenkachse 16 parallel und trägt die Schwenkhalterung 19, die mit ihrem Arm 26 in einer dem Arm 25 parallelen Ebene angeordnet und um eine Schwenkachse 18 schwenkbeweglich ist. Die Schwenkbeweglichkeit dieser Schwenkhalterung 19 ist so groß, wie es die tatsächlich durchgeführte Ausbildung der Schwenkhalterung 17 zuläßt, die vom dargestellten schematischen abweicht. Der Arm 27 der Schwenkhalterung 19 trägt den Werkzeugträger 12 mit Werkzeug 13 und Antriebsmotor 40.

Die Anordnung der Schwenkhalterungen 17,19 ist so getroffen, daß ihre Achsen 16,18 einen Schnittpunkt 21 haben. Des weiteren ist die Anordnung so aufgebaut, daß die Drehachse 20 des Werkzeugträgers 12 durch diesen Schnittpunkt 21 verläuft. Eine wesentliche Besonderheit der Ausbildung der Werkzeugmaschine besteht nun darin, daß das freie Ende 12', welches also das Werkzeug 13 hält, auf diesen Schnittpunkt 21 gerichtet ist. Sein Abstand von diesem Schnittpunkt richtet sich nach den praktischen Erfordernissen, also beispielsweise nach der radialen Erstreckung des Werkstücks 14 und nach der Länge des Werkzeugs 13. Dementsprechend ist auch die Bemessung der Schwenkhalterungen 17,19 durchzuführen, also insbesondere die Länge des Arms 25 bzw. die diesbezügliche Anordnung der Schwenkachse 18, die Länge des Arms 26 und die Länge des Arms 27 bzw. die diesbezügliche Anordnung der Drehachse 20. Im Hinblick hierauf wird die Werkzeugmaschine bedarfsweise mit auswechselbaren Winkelstücken ausgerüstet werden können, um sie anforderungsgemäß zu verwenden.

Zum Schwenkverstellen der Schwenkhalterungen 17,19 sind Schwenkverstellmotoren 28,29 vorhanden, die auf in den Figuren nicht dargestellte Winkelgetriebe einwirken. Diese Winkelgetriebe sind beispielsweise Schneckengetriebe. Das nicht dargestellte Winkelgetriebe der ersten Schwenkhalterung 17 besteht beispielsweise aus einem ersten Schneckenrad mit einer in der Schwenkachse 16 angeordneten Drehachse und einem zweiten Schneckenrad mit einem in der Drehachse des Schwenkverstellmotors 28 angeordneten Achse. Wird das in der Schwenkachse 16 angeordnete Schneckenrad feststehend bzw. mit der Oberplatte 43 fest verbunden ausgebildet, so kann durch Antrieb des Schwenkverstellmotors 28 ein Verschwenken des Arms 24 erfolgen.

Ähnlich ist in der Schwenkachse 18 eine erste Getriebeachse angeordnet und drehfest mit dem Arm 26 verbunden. Der Arm 25 hat ein Getriebegehäuse 45, in dem ein Zahneingriff des der Schwenkachse 18 zugeordneten Getrieberades in ein von dem Motor 29 beaufschlagbares Getrieberad erfolgt. Der Drehantrieb dieses der Achse des Motors 29 zugeordneten Getrieberades bewirkt ein Verschwenken der Schwenkhalterung 19 um die Achse 18.

Die beiden Schwenkverstellmotoren 28,29 sind an der ersten Schwenkhalterung 17 befestigt, so daß die Schwenkhalterung 19 verstellmotorfrei und dementsprechend weit verschwenkbar und nicht belastet ist. Die Motoren 28,29 sind beispielsweise Schrittmotoren.

Der Werkzeugträger 12 bzw. das Werkzeug 13 können bei gegebenem Abstand vom Schnittpunkt 21 der Schwenkachsen 16, 18 auf mehr als Viertelkugelflächen verschwenkt werden, deren Mittelpunkt der Schnittpunkt 21 ist. Je nach konstruktiver Ausbildung der Werkzeugmaschine läßt sich dieser erhebliche Verstellbereich wenigstens teilweise ausnutzen, um mit dem Werkzeug Werkstückbearbeitungen durchzuführen.

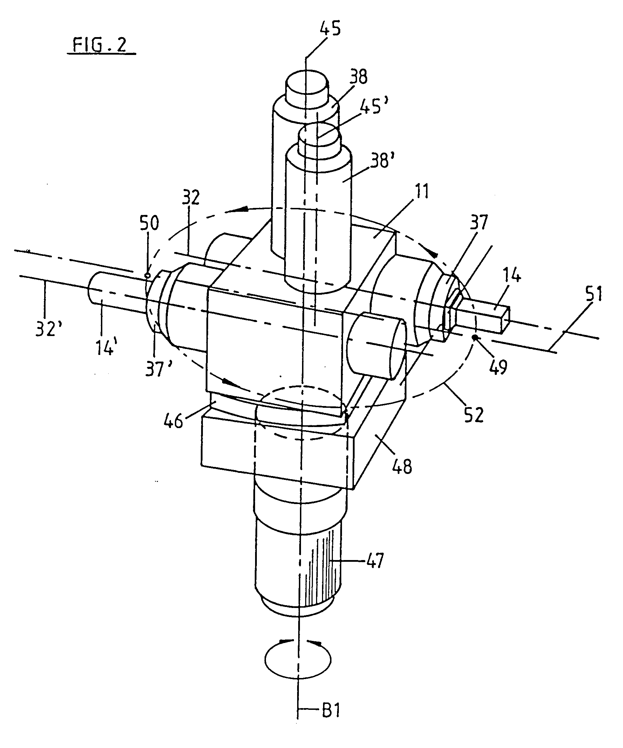

Fig.2 zeigt eine vergrößerte Darstellung der Halterung 11 mit dem Werkstückträger 37, dessen Werkstück 14 um die Rotationsachse 32 von dem Elektromotor 38 antreibbar ist. Das Werkstück 14 ist ein Vierkant, der auf die oben beschriebene Weise in Zusammenwirken mit dem Wälzschlagwerkzeug 13 des Werkzeugträgers 12 hergestellt wurde. Außerdem ist in Fig.2 auf einen zweiten Werkstückträger 37' hinzuweisen, in den ein Rohling 14' eingespannt ist, beispielsweise ein Zylinderstück, aus dem ein Vierkant hergestellt werden soll. Der Werkstückträger 37' ist um eine Rotationsachse 32' drehantreibbar, und zwar mit einem Elektromotor 38'. Auch dieser Elektromotor 38' treibt den Werkstückträger 37' über ein nicht dargestelltes Winkelgetriebe an. Die beiden Elektromotoren 38,38' sind auf derselben Seite der Halterung 11 mit ihren Drehachsen 45,45' parallel zueinander angeordnet. Die Halterung 11 ist auf einem Drehtreller 46 befestigt, der von einem Schrittmotor 47 verstellt werden kann. Letzterer ist an dem Sockel 48 des Tisches 36 des Maschinengestells 35 befestigt.

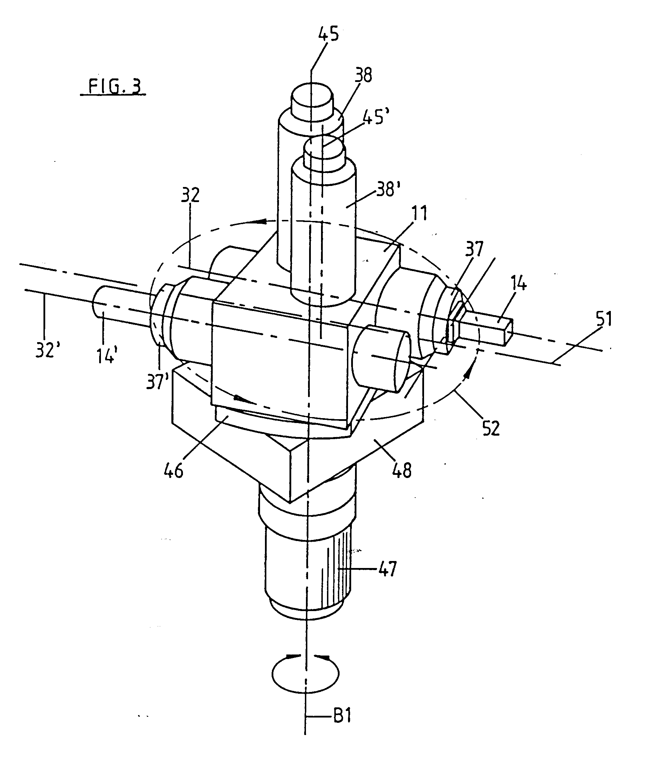

Ein Vergleich der Fig.2,3 ergibt, daß der Drehteller 46 und damit die Halterung 11 einschließlich ihrer Werkstückträger 37,37' vom Motor 47 um die Schwenkachse B1 verschwenkt werden kann, die durch die Achse des Motors 47 bestimmt wird. Fig.3 zeigt eine Relativverdrehung der Halterung 11 im durch die Pfeile gekennzeichneten Uhrzeigersinn, so daß das Werkstück 14 aus seiner ersten, der Werkstückbearbeitung dienenden Stellung 49 in eine zweite vorbestimmte Stellung 50 verschwenkbar ist. Diese Stellungen 49,50 werden in den Fig.2 durch die Schnittpunkte einer der Rotationsachse 32 parallelen Geraden 51 mit dem Schwenkkreis 52 veranschaulicht. Letzterer stellt die Schwenkebene der Halterung 11 dar.

In den Figuren sind zwei Werkstückträger 37,37' mit den zugehörigen Elektromotoren und Aggregaten vorhanden. Es ist möglich, mehr als zwei rotierbare Werkstückträger an der Halterung 11 anzubringen, wobei sie gleichmäßig über den Schwenkumfang verteilt werden. Beispielsweise ist es möglich, vier Werkstückträger in einer Ebene anzuordnen, um so bei Schwenkwinkeln von 90° zu erreichen, daß stets einer der Werkstückträger in die Position desjenigen Werkstückträgers gelangt, der aus der Stellung 49 herausgeschwenkt wurde.

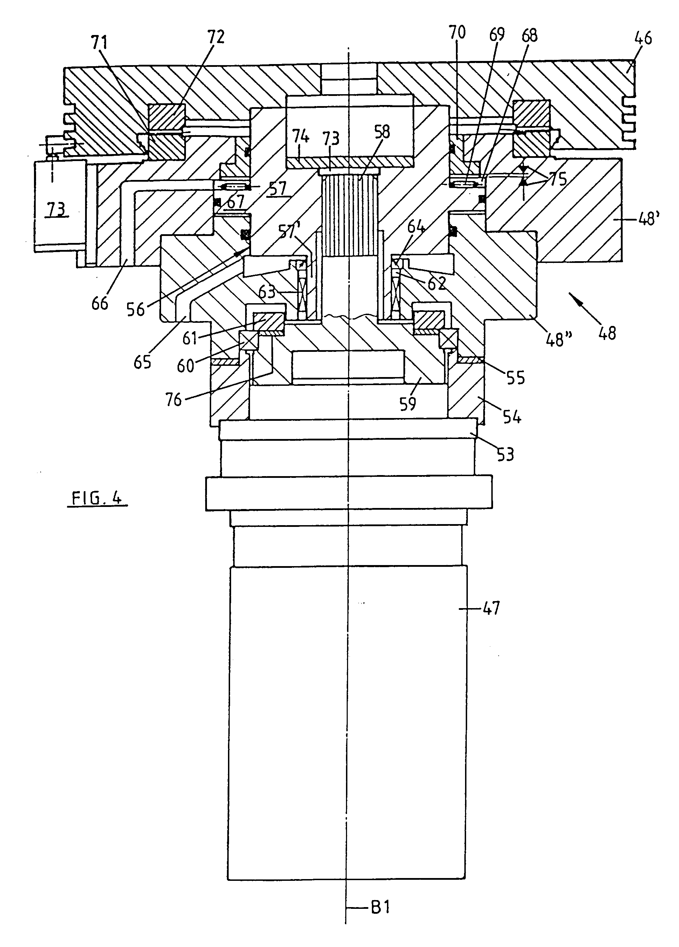

In Fig.4 ist der Befestigungsflansch 53 des Motors 47 mit einem Haltering 54 über einen Distanzring 55 in nicht dargestellter Weise an dem Sockel 48 befestigt, der gemäß Fig.1 auf dem Tisch 36 des Maschinengestells 35 angeordnet ist. Der Sockel 48 besteht aus dem oberen Sockelring 48' und dem unteren Sockelring 48'', die ebenfalls in nicht dargestellter Weise miteinander verbunden und an dem Tisch 36 befestigt sind. Oberhalb des Sockelrings 48' ist der Schwenkteller 46 angeordnet, auf dem die Halterung 11 abgestützt ist.

Der Schwenkteller 46 ist gleichachsig mit dem Motor 47 angeordnet. Ihre gemeinsame Schwenkachse B1 ist auch Symmetrieachse für eine Hubeinrichtung 56, die als wesentliches Teil einen axial verstellbaren Kolben 57 hat, der mit dem Schwenkteller 46 fest zusammengebaut ist. Andererseits ist der Kolben 57 axialbeweglich über eine Verzahnung 58 eines Kopfstücks 59 drehfest verbunden. Die Bohrung 73 des Kolbens 57 für den Eingriff der Verzahnung 58 ist durch eine Abdeckplatte 74 verschlossen. Das Kopfstück 59 ist vom Motor 47 drehantreibbar, so daß Bewegungen dieses Kopfstücks 59 über den Kolben 57 auf den Schwenkteller 46 übertragen werden können.

Das dreh- bzw. schwenkbare Kopfstück 59 ist mit einem Wälzlager 60 schwenkreibungsarm gelagert, wobei der nicht dargestellte Außenring dieses Wälzlagers 60 zwischen dem Haltering 54 und dem unteren Sockelring 48'' eingespannt ist, während der ebenfalls nicht dargestellte Innenring des Wälzlagers 60 mit Hilfe eines Spannrings 61 gehalten wird, der über eine Distanzscheibe 76 am Kopfstück z.B. durch Verschraubung befestigt ist.

Der Hubkolben 57 greift mit einem Ringbund 57' in eine Ausnehmung 62 des unteren Sockelrings 48, in der ein Gleitlager 63 zur Führung des Kolbens 57 bei dessen Verstellungen vorhanden ist. Dieser Raum 62 ist durch einen Dichtungsring 64 gegen Druckmittel abgedichtet, das durch einen Druckmittelkanal 65 unter den Kolben 57 geleitet wird, um diesen anheben zu können. Ein weiterer Druckmittelkanal 66 dient der hydraulischen Entlastung beim Anheben bzw. der Druckbeaufschlagung des Kolbens 57 bei dessen Absenken und beim Sichern der tiefsten Stellung des Kolbens 57, wobei der Kanal 65 der hydraulischen Entlastung dient.

Der Kolben hat einen Radialflansch 67 im Kolbenraum 68 zwischen dem unteren Sockelring 48 und dem oberen Sockelring 48' und trägt ein gegen die Unterseite des oberen Sockelrings 48' gekehrtes Wälzlager 69, das sich im Anlagefalle an einem Wälzring 70 des oberen Sockelrings 48' abstützt. Eine Schwenkverstellung des Tellers 46 ist demgemäß reibungsarm. Der Kolbenhub der Hubeinrichtung 56 wird durch die Pfeile 75 symbolisiert.

Der obere Sockelring 48' hat einen mit der Schwenkachse B1 koaxialen Zahnkranz 71, der einem ebenfalls koaxialen Zahnkranz 72 des Schwenktellers 46 gegenüberliegt. Beide Zahnkränze haben eine Verzahnung, die in der Schwenkebene oder parallel dazu liegt. Diese Verzahnung ist vorzugsweise eine Plan-Kerbverzahnung, nämlich eine sogenannte Hirth-Verzahnung, mit einem Spitzenwinkel von z.B. 90°. Diese Verzahnung gewährleistet, daß der Schwenkteller 46 bei abgesenktem Hubkolben 57 nicht schwenkbar ist, weil die Verzahnung eine solche Verschwenkung nicht zuläßt. Bei Druckbeaufschlagung des Kolbens 57 in Fig.4 vertikal nach oben wird der Schwenkteller 46 angehoben, die Zahnkränze 71,72 kommen außer Eingriff und eine Schwenkverstellung durch den Motor 47 ist möglich. Wenn die neue Schwenkstellung erreicht ist, was beispielsweise durch einen Endschalter 73 feststellbar ist, so wird der Hubkolben 57 abgesenkt und die Verzahnungen der Zahnkränze 71,72 kommen in Eingriff. Dabei findet eine Justierung des Schwenktellers 46 relativ zum oberen Sockelring 48' statt, so daß das Werkstück 14 in seine der Bearbeitung dienenden Stellung gelangt.

## Patentansprüche

1. Werkzeugmaschine (10), mit einem positionierbaren Werkzeugträger (12) und mit einem relativ dazu positionierbaren, rotierbaren Werkstückträger (37), der an einer Halterung (11) der Maschine angebracht und von einem senkrecht zu seiner Rotationsachse (32) angeordneten Elektromotor (38) über ein Winkelgetriebe angetrieben ist, wobei die Halterung (11) aus einer ersten, der Werkstückbearbeitung dienenden Stellung (49) in eine zweite vorbestimmte Stellung (50) verschwenkbar ist und einen zweiten rotierbaren Werkstückträger (37') aufweist, der bei der Schwenkung der Halterung (11) in die erste, der Werkstückbearbeitung dienende Stellung (49) gelangt, **dadurch gekennzeichnet**, daß der Elektromotor (38) an der Halterung (11) befestigt ist, daß die Schwenkebene der Halterung (11) senkrecht zu der Drehachse (45) des Elektromotors (38) angeordnet ist, daß auch der zweite Werkstückträger (37') über ein Winkelgetriebe von einem zweiten Elektromotor (38') drehangetrieben ist, der zu dem ersten Elektromotor (38) auf derselben Seite der Halterung (11) parallel angeordnet ist, und daß alle Rotationsachsen (32) der Werkstückträger (37,37') in der Schwenkebene der Halterung (11) angeordnet sind.

2. Werkzeugmaschine nach Anspruch 1, **dadurch gekennzeichnet**, daß mehr als zwei rotierbare Werkstückträger (37,37') an der Halterung angebracht und gleichmäßig über den Schwenkumfang verteilt angeordnet sind, und daß die Halterung (11) in einer der Anzahl der Werkstückträger (37,37') entsprechenden Schrittzahl in gleich großen Schritten um 360° verschwenkbar ist.

3. Werkzeugmaschine nach Anspruch 1 oder 2, **dadurch gekennzeichnet**, daß die Halterung (11) der rotierbaren Werkstückträger (37,37') von einem einzigen, maschinengestellfesten Schrittmotor (47) verschwenkbar ist.

4. Werkzeugmaschine nach einem der Ansprüche 1 bis 3, **dadurch gekennzeichnet**, daß die Halterung (11) einen horizontalen Schwenkteller (46) hat, der in den vorbestimmten Stellungen (49,50) von einer druckmittelbeaufschlagbaren Hubeinrichtung (56) wahlweise schwenkfest am Maschinengestell (35) verrastbar oder außerhalb dieser Verrastung in einer seine Schwenklage zu ändern gestattenden Stellung anzuordnen ist.

5. Werkzeugmaschine nach einem der Ansprüche 1 bis 4, **dadurch gekennzeichnet**, daß der Schwenkteller (46) an seiner Unterseite einen mit seiner Schwenkachse (B1) koaxialen Zahnkranz (72) mit einer zur Schwenkachse (B1) ausgerichteten Verzahnung aufweist, die mittels der Hubeinrichtung (56) mit der Verzahnung eines maschinengestellfesten Zahnkranzes (71) in oder außer Eingriff bringbar ist.

6. Werkzeugmaschine nach Anspruch 5, **dadurch gekennzeichnet**, daß die Verzahnung der Zahnkränze (71,72) eine der Schwenkebene parallele Plan-Kerbverzahnung ist.

7. Werkzeugmaschine nach einem der Ansprüche 1 bis 6, **dadurch gekennzeichnet**, daß die Hubeinrichtung (56) einen den Schwenkteller (46) abstützenden, mit der Schwenkachse (B1) gleichachsigen Kolben (57) aufweist, der über eine Gleitbewegungen gestattende Verzahnung (58) mit dem Abtrieb des maschinengestellfesten Schwenkmotors (47) antriebsmäßig verbunden ist.

8. Werkzeugmaschine nach Anspruch 17, **dadurch gekennzeichnet**, daß der Hubkolben (57) einen Radialflansch (67) mit einem bei Druckbeaufschlagung am Maschinengestell ab stützbaren und den Hub begrenzenden Wälzlager (69) aufweist.

## Claims

1. Machine tool (10) comprising a positionable tool carrier (12) and a rotatable workpiece carrier (37) which is positionable relative thereto, which is mounted on a support (11) of the machine and which is driven via mitre-wheel gearing from an electric motor (38) which is arranged perpendicular to its axis of rotation (32), wherein the support (11) is pivotable from a first position (49) serving for the machining of workpieces into a second, predetermined position (50), and wherein the support comprises a second rotatable workpiece carrier (37') which becomes operational upon the pivoting of the support (11) into the first position (49) serving for the machining of workpieces, characterised in that the electric motor (38) is fixed to the support (11), the plane of pivotation of the support (11) is arranged perpendicular to the axis of rotation (45) of the electric motor (38), the second workpiece carrier (37') is also rotatably driven via mitre-wheel gearing from a second electric motor (38') which is arranged parallel to the first electric motor (38) on the same side of the support (11), and all axes of rotation (32) of the workpiece carriers (37, 37') are arranged in the plane of pivotation of the support (11).

2. Machine tool according to claim 1, characterised in that more than two rotatable workpiece carriers (37, 37') are mounted on the support and are uniformly distributed over the range of pivotal movement, and in that the support (11) is pivotable through 360° in equal size steps with the number of a steps corresponding to the number of workpiece carriers (37, 37').

3. Machine tool according to claim 1 or 2, characterised in that the support (11) for the rotatable workpiece carriers (37, 37') is pivotable by a single stepping motor (47) which is fixed to the machine frame.

4. Machine tool according to one of claims 1 to 3, characterised in that the support (11) has a horizontal pivot plate (46) which in the predetermined positions (49, 50) can be selectively latched by a lift device (56) which is actuated by a pressurised medium so as to be pivotally fixed to the machine tool frame (35) or outside this latching is arranged in one position to permit its pivot position to change.

5. Machine tool according to one of claims 1 to 4, characterised in that the pivot plate (46) has on its underside a toothed ring gear (72) coaxial with its pivot axis (B1) with toothing directed towards the pivot axis (B1), wherein the toothing can, by means of the lift device (56), be brought into or out of engagement with the toothing of a ring gear (71) which is fixed to the machine frame.

6. Machine tool according to claim 5, characterised in that the toothing on the ring gears (71, 72) is planar notched toothing parallel to the plane of pivotation.

7. Machine tool according to one of claims 1 to 6, characterised in that the lift device (56) comprises a piston (57) which supports the pivot plate (46) and which is on a common axis with the pivot axis (B1), the piston being connected drivingly with the take-off of the pivot motor (47) which is fixed to the machine frame by means of toothing (58) which permits a sliding movement.

8. Machine tool according to claim 7, characterised in that the lift piston (57) has a radial flange (67) with a rolling bearing (69) which limits the lift and which supports it on the machine frame upon pressurisation.

## Revendications

1. Machine-outil (10) comportant un porte-outil (12) apte à être positionné et un porte-pièce rotatif (37), apte à être positionné par rapport à celui-ci, qui est monté sur un support (11) de la machine et entraîné, par l'intermédiaire d'un engrenage angulaire, par un moteur électrique (38) disposé perpendiculairement à son axe de rotation (32), étant précisé que le support (11) est apte à pivoter d'une première position (49) servant à l'usinage de la pièce vers une seconde position prédéfinie (50), et comporte un second porte-pièce rotatif (37') qui, lors du pivotement du support (11), arrive dans la première position (49) servant à l'usinage de la pièce, caractérisée en ce que le moteur électrique (38) est fixé au support (11), en ce que le plan de pivotement du support (11) est disposé perpendiculairement à l'axe de rotation (45) du moteur électrique (38), en ce que le second porte-pièce (37') est lui aussi entraîné en rotation, par l'intermédiaire d'un engrenage angulaire, par un second moteur électrique (38') qui est disposé parallèlement au premier moteur électrique (38), du même côté du support (11), et en ce que tous les axes de rotation (32) des porte-pièces (37, 37') sont disposés dans le plan de pivotement du support (11).

2. Machine-outil selon la revendication 1, caractérisée en ce que plus de deux porte-pièces rotatifs (37, 37') sont montés sur le support et répartis régulièrement sur le périmètre de pivotement, et en ce que le support (11) est apte à pivoter à 360° à pas égaux suivant un nombre de pas correspondant au nombre de porte-pièces (37, 37').

3. Machine-outil selon la revendication 1 ou 2, caractérisée en ce que le support (11) des porte-pièces rotatifs (37, 37') est apte à pivoter grâce à un moteur pas à pas (47) unique qui est solidaire du bâti de la machine.

4. Machine-outil selon l'une des revendications 1 à 3, caractérisée en ce que le support (11) comporte un plateau pivotant horizontal (46) qui est au choix apte à être encliqueté, fixe en rotation, dans les positions prédéfinies (49, 50) au niveau du bâti (35) de la machine grâce à un dispositif de levage (56) apte à être sollicité par un agent de pression, ou qui peut être disposé, en dehors de cet encliquetage, dans une position permettant de modifier sa position de pivotement.

5. Machine-outil selon l'une des revendications 1 à 4, caractérisée en ce que le plateau pivotant (46) comporte, sur son côté inférieur, une couronne dentée (72) coaxiale par rapport à son axe de pivotement (B1) et pourvue d'une denture dirigée vers ledit axe de pivotement (B1), qui est apte à être à être accouplée à la denture d'une couronne dentée (71) solidaire du bâti de la machine ou à être désaccouplée de cette denture à l'aide du dispositif de levage (56).

6. Machine-outil selon la revendication 5, caractérisée en ce que la denture des couronnes dentées (71, 72) est une denture plate parallèle au plan de pivotement.

7. Machine-outil selon l'une des revendications 1 à 6, caractérisée en ce que le dispositif de levage (56) comporte un piston (57) qui supporte le plateau pivotant (46), qui est situé dans le même axe que l'axe de pivotement (B1) et qui est relié, en matière d'entraînement, à la sortie du moteur (47) solidaire du bâti de la machine par l'intermédiaire d'une denture (58) permettant des mouvements de coulissement.

8. Machine-outil selon la revendication 7, caractérisée en ce que le piston de levage (57) comporte une bride radiale (67) pourvue d'un palier à roulement (69), qui est apte à s'appuyer, lors de la sollicitation par pression, au bâti de la machine et qui limite la course.
